# DEMANDE DE BREVET EUROPEEN

(11) **EP 4 692 960 A1**
(43) Date de publication de la demande: **11.02.2026**
(21) Numéro de dépôt: 24193708.5
(22) Date de dépôt: 08.08.2024
(51) Int. Cl.: G04G 9/00

(54) **DISPOSITIF À CRISTAUX LIQUIDES POUR UNE PIÈCE D'HORLOGERIE**

(71) Demandeur: The Swatch Group Research and Development Ltd, 2074 Marin (CH)
(72) Inventeur: SAGARDOYBURU, Michel, 2000 Neuchâtel (CH)
(74) Mandataire: ICB SA

(57) **Abrégé**

Le dispositif d'affichage comprend une cellule à cristaux liquides (2) formée de deux plaques transparentes (4, 6) définissant une zone utile (12), destinée à définir la zone visible de cette cellule dans une pièce d'horlogerie, et incorporant des électrodes formant un affichage commutable d'au moins une information et/ou d'au moins un décor dans la zone utile. La cellule à cristaux liquides (cellule LCD) comprend dans la zone utile une pluralité de polariseurs (16, 18) qui sont agencés sur la surface extérieure (5) d'une des deux plaques transparentes respectivement dans une pluralité de zones distinctes (17, 19) et qui forment chacun partiellement ledit affichage commutable. Au moins deux polariseurs de la pluralité de polariseurs présentent entre eux au moins une propriété optique différente ou une orientation de polarisation différente, le dispositif d'affichage horloger étant agencé de manière à engendrer visuellement une variation entre au moins des parties respectives desdits au moins deux polariseurs et/ou des parties respectives dudit affichage commutable dans les zones distinctes respectives.

## Description

### Domaine technique de l'invention

La présente invention concerne le domaine de la fabrication des dispositifs d'affichage à cristaux liquides (ci-après aussi nommés 'dispositifs LCD') pour des pièces d'horlogerie et plus généralement de cellules à cristaux liquides (ci-après aussi nommées 'cellules LCD') formant de tels dispositifs LCD.

### Arrière-plan technologique

On connaît du document EP1 128 240 un ensemble d'affichage électronique à inversion de contraste qui est formé d'une cellule d'affichage à cristaux liquides, ayant des électrodes et contre-électrodes définissant des segments d'information commutables, et d'une valve optique superposée à la cellule d'affichage et formée d'une cellule à cristaux liquides ayant une électrode et une contre-électrode recouvrant l'entier de la zone utile de la cellule d'affichage pour pouvoir varier successivement le contraste de l'entier de la zone utile de la cellule d'affichage ou au moins deux électrodes et deux contre-électrodes correspondantes définissant au moins deux zones d'affichage complémentaire de la zone utile qui peuvent respectivement présenter simultanément un contraste positif (information foncée sur fond clair) et un contraste négatif (information claire sur fond foncé). La cellule d'affichage et la valve optique comprennent un premier polariseur avant et un second polariseur arrière. Par 'zone utile' de la cellule d'affichage ou de l'ensemble d'affichage électronique, on comprend la zone destinée à être vue par un utilisateur, c'est-à-dire la zone visible de cette cellule d'affichage ou de cet ensemble d'affichage électronique une fois l'ensemble d'affichage électronique incorporé dans une pièce d'horlogerie.

Le document EP1 156 360 propose un enseignement similaire à celui du document précédent, toutefois il est un peu plus sophistiqué par le fait qu'il propose un ensemble d'affichage à inversion chromatique de contraste qui est agencé pour pouvoir inverser la couleur de l'information affichée ou celle du fond sur lequel cette information apparaît lorsque des électrodes de la cellule d'affichage sont activés (état ON). A cet effet, il est prévu en outre un polariseur intermédiaire situé entre la cellule d'affichage et la valve optique.

Les ensembles d'affichage susmentionnés, pour permettre une inversion de contraste ou pour différencier diverses zones d'affichage de l'ensemble d'affichage par une variation de la couleur des fonds respectifs, sont complexes et encombrants. Ils sont formés de deux cellules à cristaux liquides empilées l'une sur l'autre. On remarquera cependant que le fait de pouvoir différencier des zones d'affichage par la couleur (incluant le blanc et le noir) du fond et/ou le ton, notamment clair ou foncé, de cette couleur ou/et par la couleur des informations affichées est intéressant pour mettre en évidence certaines des informations ou pour les distinguer. Ceci permet notamment de donner un contraste visuel entre diverses zones d'affichage. Ainsi, la distinction de diverses zones d'affichage dans des ensembles d'affichage LCD présente un aspect esthétique intéressant en plus d'un aspect fonctionnel, par exemple en séparant visuellement une zone d'affichage de l'heure d'une zone d'affichage de la date ou d'une fonction sélectionnée.

### Résumé de l'invention

L'invention a pour objectif principal de proposer des dispositifs d'affichage à cristaux liquides (dispositifs d'affichage LCD) qui comprennent une cellule LCD permettant d'afficher, de manière commutable, au moins une information et/ou au moins un décor et définissant diverses zones, dans une zone utile de la cellule LCD, dont au moins deux servent à l'affichage commutable et présentent entre elles visuellement une variation, en particulier une différence de couleurs (incluant le blanc et le noir) ou/et de ton (plus ou moins foncés) d'au moins une couleur ou/et des effets optiques différents entre lesdites au moins deux zones et/ou une différence de couleurs dans l'affichage commutable prévu dans ces au moins deux zones. Ainsi, l'invention a pour but de distinguer visuellement lesdites au moins deux zones, dans la zone utile d'une cellule LCD d'un dispositif d'affichage LCD, et/ou l'information ou un décor commutable dans ces au moins deux zones, et ceci tout en restant peu encombrant, en particulier sans augmenter l'épaisseur d'une cellule LCD usuelle formant de tels dispositifs d'affichage LCD, et relativement peu complexe.

A cet effet, l'invention propose un dispositif d'affichage horloger comprenant une cellule à cristaux liquides formée d'une première plaque et d'une deuxième plaque, qui sont transparentes, et d'un cordon de colle reliant les première et deuxième plaques et définissant avec celles-ci un logement clos contenant des cristaux liquides, la cellule à cristaux liquides définissant à l'intérieur du cordon de colle une zone utile, qui est destinée à définir la zone visible de cette cellule à cristaux liquides dans une pièce d'horlogerie auquel le dispositif d'affichage est destiné, et incorporant des électrodes (incluant par la suite 'électrodes' et 'contre-électrodes') formant un affichage commutable d'au moins une information et/ou d'au moins un décor dans la zone utile. La cellule à cristaux liquides comprend dans la zone utile une pluralité de polariseurs qui sont agencés sur la surface extérieure de la première plaque respectivement dans une pluralité de zones distinctes et qui forment chacun partiellement ledit affichage commutable. Ensuite, au moins deux polariseurs de la pluralité de polariseurs présentent entre eux au moins une propriété optique différente ou une orientation de polarisation différente, le dispositif d'affichage horloger étant agencé de manière à engendrer visuellement une variation entre au moins des parties respectives desdits au moins deux polariseurs et/ou des parties respectives dudit affichage commutable dans les zones distinctes respectives.

L'invention présente l'avantage de parvenir à l'objectif principal de l'invention en utilisant une seule cellule LCD, sans valve optique additionnelle superposée à la cellule LCD. En d'autres termes, le dispositif d'affichage horloger selon l'invention peut ne comprendre qu'un seul ensemble de base, lequel est formé par deux plaques transparentes reliées par un cordon de colle et définissant entre elles un logement contenant des cristaux liquides. Ainsi, le dispositif d'affichage est peu encombrant, en particulier il n'augmente pas l'épaisseur des dispositifs d'affichage LCD horlogers, et il reste relativement peu complexe.

Dans un mode de réalisation général, lesdits au moins deux polariseurs de la pluralité de polariseurs s'étendent sensiblement dans un même plan géométrique.

Dans une première variante du mode de réalisation général, lesdits au moins deux polariseurs de la pluralité de polariseurs sont juxtaposés et présentent des contours respectifs dont une partie de l'un longe une partie de l'autre.

Dans une deuxième variante du mode de réalisation général, un premier polariseur parmi lesdits au moins deux polariseurs de la pluralité de polariseurs présente une ouverture dans laquelle est situé un deuxième polariseur desdits au moins deux polariseurs, le deuxième polariseur présentant un contour extérieur longeant le contour de l'ouverture.

Le mode de réalisation général présente l'avantage d'être particulièrement peu encombrant en n'augmentant pas l'épaisseur d'une cellule LCD usuelle formant des dispositifs d'affichage LCD horlogers.

### Brève description des figures

L'invention sera décrite ci-après de manière plus détaillée à l'aide des dessins annexés, donnés à titre d'exemples nullement limitatifs, dans lesquels :
- la Figure 1 est une vue en coupe, selon la ligne de coupe I-I de la Figure 2, d'une cellule LCD formant une première variante d'un premier mode de réalisation principal d'un dispositif d'affichage horloger selon l'invention ;
- la Figure 2 est vue de dessus du dispositif d'affichage horloger de la Figure 1 ;
- la Figure 3 est vue en coupe d'une cellule LCD formant une deuxième variante du premier mode de réalisation principal ;
- la Figure 4 est vue en coupe, selon la ligne IV-IV de la Figure 5, d'une cellule LCD formant une troisième variante du premier mode de réalisation principal ;
- la Figure 5 est vue de dessus du dispositif d'affichage horloger de la Figure 4 ;
- la Figure 6 est une vue en coupe, similaire à la Figure 1, d'une cellule LCD formant une première variante d'un deuxième mode de réalisation principal d'un dispositif d'affichage horloger selon l'invention ;
- la Figure 7 est vue en coupe d'une cellule LCD formant une deuxième variante du deuxième mode de réalisation principal ;
- la Figure 8 est une vue en coupe d'une cellule LCD formant une troisième variante du deuxième mode de réalisation principal ; et
- la Figure 9 est vue de dessus d'une variante particulière du dispositif d'affichage horloger selon l'invention.

### Description détaillée de l'invention

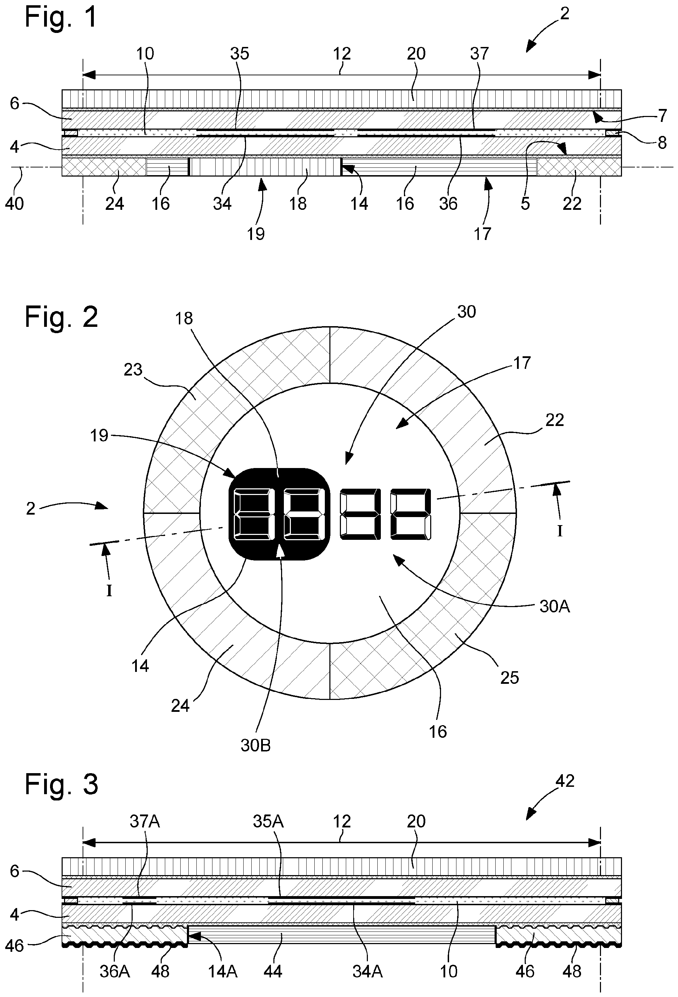

En référence aux Figures 1 et 2, on décrira une cellule LCD 2 formant une première variante d'un premier mode de réalisation principal d'un dispositif d'affichage horloger selon l'invention.

Le dispositif d'affichage horloger comprend généralement une cellule à cristaux liquides 2 formée d'une première plaque transparente 4, d'une deuxième plaque transparente 6 et d'un cordon de colle 8 reliant les première et deuxième plaques et définissant avec celles-ci un logement clos contenant des cristaux liquides 10. La cellule à cristaux liquides définit à l'intérieur du cordon de colle une zone utile 12, qui est destinée à définir la zone visible de cette cellule dans une pièce d'horlogerie auquel le dispositif d'affichage est destiné, et elle incorpore deux ensembles d'électrodes 34 et 36 sur la surface intérieure de la première plaque transparente 4 et deux ensemble d'électrodes 35 et 37 sur la surface intérieure de la deuxième plaque transparente 6 qui sont situées respectivement en face des ensembles d'électrodes 34 et 36 et sont au moins partiellement superposées à ces électrodes pour former un affichage commutable 30 d'au moins une information et/ou d'au moins un décor dans la zone utile. On notera que par 'ensemble d'électrodes' on comprend de manière générale 'au moins une électrode' et que la référence numérique se rapporte soit à l'ensemble d'électrodes, soit à une ou plusieurs électrode(s) de cet ensemble d'électrodes. Dans l'exemple représenté en figure 2, chaque ensemble d'électrodes comprend une pluralité d'électrodes définissant des segments pour l'affichage classique des chiffres '0' à `9' dans un affichage LCD horloger (chaque ensemble d'électrodes est représenté aux figures par un trait continu par simplification du dessin).

Selon l'invention, la cellule à cristaux liquides 2 comprend dans la zone utile 12 une pluralité de polariseurs, plus précisément deux polariseurs 16 et 18 dans l'exemple représenté aux figures, qui sont agencés sur la surface extérieure 5 de la première plaque 4 respectivement dans une pluralité de zones distinctes, à savoir deux zones distinctes 17 et 19 dans l'exemple représenté. Chacune des électrodes 34 à 37 est superposée à un polariseur 16, 18 de la pluralité de polariseurs et à un polariseur 20 agencé sur la surface extérieure 7 de la deuxième plaque transparente 6 de sorte à former ensemble l'affichage commutable 30. En outre, de manière générale, au moins deux polariseurs de la pluralité de polariseurs (soit les deux polariseurs 16, 18 dans la variante représentée) sont chacun superposés à au moins une paire d'électrodes 34 et 35, respectivement 36 et 37 agencées pour former une partie 30A, respectivement 30B de l'affichage commutable 30 dans la zone distincte respective 17, 19 dans laquelle s'étend ce polariseur. On remarquera que, dans l'exemple représenté aux figures, chacun des deux polariseurs 16, 18 est ainsi superposé à au moins une paire d'électrodes pour former une partie de l'affichage commutable 30 dans la zone distincte respective de ce polariseur. En d'autres termes, chacun des polariseurs de ladite pluralité de polariseurs forme une partie de l'affichage commutable 30.

Ensuite, de manière générale, lesdits au moins deux polariseurs de la pluralité de polariseurs présentent entre eux au moins une propriété optique différente ou une orientation de polarisation différente et la cellule LCD est agencée de manière à engendrer visuellement, dans le dispositif d'affichage horloger, une variation entre au moins des parties respectives desdits au moins deux polariseurs et/ou des parties respectives de l'affichage commutable dans lesdites au moins deux zones distinctes respectives. Dans l'exemple représenté, les deux polariseurs 16 et 18 présentent entre eux une variation visuelle dans le dispositif d'affichage, plus particulièrement dans la cellule LCD 2, à savoir notamment en combinaison avec le polariseur 20 agencé en face sur la surface extérieure de la deuxième plaque 6. De plus, les parties 30A et 30B de l'affichage commutable 30 dans les zones distinctes respectives 17 et 19 présentent aussi visuellement une variation lorsque ces parties de l'affichage commutable sont activées.

Dans la première variante représentée aux Figures 1 et 2, les polariseurs 16 et 18 sont de préférence des polariseurs arrière, agencés sous la plaque 4 qui est une plaque inférieure, et le polariseur 20 est un polariseur avant qui est avantageusement le seul polariseur agencé sur la surface extérieure 7 de la deuxième plaque 6, laquelle est une plaque supérieure. De préférence, comme représenté, le seul polariseur 20 s'étend sur toute la surface utile 12 de la cellule LCD 2 et avantageusement un peu en périphérie de cette surface utile. On notera que dans une variante particulière, la cellule LCD 2 est retournée pour son agencement dans une montre de sorte que les polariseurs 16 et 18 sont alors des polariseurs avant et le polariseur 20 est un polariseur arrière. Cette variante particulière n'est pas préférée étant donné le fait que le polariseur avant est d'une seule pièce qui s'étend sur toute la surface utile 12 est avantageux au niveau esthétique, car les interstices entre des polariseurs arrière sont moins visibles pour un utilisateur de la montre que de mêmes interstices entre des polariseurs avant.

Ensuite, de manière spécifique, les trois polariseurs 16, 18 et 20 sont matériellement identiques et sont notamment du type absorbant-transmissif. Le dispositif d'affichage LCD est agencé dans une montre au-dessus d'un cadran clair ayant une couleur différente de celle des polariseurs, en particulier au-dessus d'un affichage analogique qui peut être vu au moins partiellement au travers du dispositif d'affichage LCD. Cependant, le polariseur 16 présente une orientation de polarisation, dans la cellule LCD 2, qui est orthogonale à celle des polariseurs 18 et 20, ces derniers ayant une même orientation de polarisation. Comme la cellule LCD est ici du type TN, la zone distincte 17 présentera un fond relativement clair (selon la couleur du cadran) et la partie 30A de l'affichage analogique est à contraste positif, les paires d'électrodes superposées qui sont activées engendrant des segments relativement foncés. En revanche, la zone distincte 19 présentera un fond relativement foncé et la partie 30B de l'affichage analogique est à contraste négatif, les paires d'électrodes superposées qui sont activées engendrant des segments relativement clairs (selon la couleur du cadran). Ainsi, la zone 17 de la zone utile 12 permet de voir en tout temps au travers du dispositif d'affichage LCD ce qui est en-dessous, en particulier un affichage analogique et un cadran, seuls les segments activés de l'affichage commutable masquant cet arrière-plan. Au contraire, la zone 19 de la zone utile 12 ne laisse voir cet arrière-plan qu'au travers des segments activés de l'affichage commutable. A noter que, pour augmenter le contraste, le polariseur 18 est avantageusement recouvert sur sa surface arrière par un film réfléchissant, comme ceci sera le cas dans d'autres variantes de réalisation qui seront décrites par la suite. Dans un autre agencement de la montre, la cellule LCD est agencée comme cadran d'un affichage analogique, à savoir sous les aiguilles de cet affichage analogique. Bien que l'agencement du dispositif d'affichage LCD selon l'invention est avantageusement incorporé dans une montre ayant un affichage analogique, le dispositif d'affichage selon l'invention peut aussi être incorporé dans une montre électronique n'ayant pas d'affichage analogique.

Dans une première variante générale, ladite propriété optique différente entre deux polariseurs est une variation de couleur.

Dans une deuxième variante générale, ladite propriété optique différente entre deux polariseurs est une variation de ton dans une couleur donnée ; à savoir une variation d'intensité.

Selon une caractéristique importante des modes de réalisation principaux, lesdits au moins deux polariseurs de la pluralité de polariseurs s'étendent sensiblement dans un même plan géométrique, de préférence dans un même plan géométrique 40. Plus généralement, tous les polariseurs de ladite pluralité de polariseurs s'étendent sensiblement dans un même plan géométrique, de préférence tous dans un même plan géométrique 40.

Selon une caractéristique particulière de l'invention, un premier polariseur parmi lesdits au moins deux polariseurs de la pluralité de polariseurs présente une ouverture dans laquelle est situé un deuxième polariseur desdits au moins deux polariseurs de la pluralité de polariseurs, le deuxième polariseur présentant un contour extérieur longeant le contour de l'ouverture. Dans la première variante décrite ici, le polariseur 16 présente une ouverture 14 dans laquelle est situé le polariseur 18, lequel a des dimensions correspondant à celles de l'ouverture. Le contour extérieur du polariseur 18 longe ainsi le contour de l'ouverture 14. Par le terme « longer », on comprend une définition usuelle du dictionnaire, c'est-à-dire « aller le long et près de, en particulier parallèlement à ». Il est prévu que l'interstice entre les deux contours qui se longent soit minime, quasi non visible ou de préférence non visible pour un utilisateur. Dans les modes de réalisation principaux, comme les premier et deuxième polariseurs sont sensiblement agencés dans un même plan géométrique et de préférence dans le même plan géométrique, le polariseur 18 est situé à l'intérieur de l'ouverture 14 du polariseur 16. Pour que l'interstice soit minime et de préférence non visible, un procédé de fabrication spécifique est nécessaire pour positionner très précisément le polariseur 16 relativement au polariseur 18. A cet effet, on peut prévoir des cibles / repères sur au moins une des deux plaques transparentes 4 et 6, comme celles qui sont représentées à la Figure 1 au-dessus et au-dessous du cordon de colle 8 qui sont hors de la zone utile 12. Ces cibles / repères servent à permettre un alignement précis avec des marques d'alignement en relation fixe et déterminée avec un polariseur lors de son dépôt sur la surface extérieure de la plaque transparente sur laquelle il est finalement agencé.

Dans la réalisation de la Figure 1 et 2, il est en outre prévu quatre parties annulaires décoratives 22, 23, 24 et 25 qui sont agencées en périphérie du polariseur 16 sur la surface extérieure 5 de la plaque inférieure 4, ce polariseur 16 présentant un contour extérieur circulaire. Ces parties décoratives sont agencées dans le même plan géométrique que les polariseurs 16 et 18 (à noter que ces polarisateurs et les parties annulaires décoratives sont montrés, à la Figure 2, en transparence des éléments situés au-dessus). Chaque partie annulaire décorative présente un rayon intérieur sensiblement égal au rayon du polariseur 16. Il est aussi prévu que les contours intérieurs des parties décoratives longent le contour extérieur du polariseur 16, de sorte que l'interstice soit également minime entre ces éléments et de préférence non visible pour un utilisateur. Ces parties décoratives peuvent être variées. Dans un premier exemple, il s'agit de portions de films opaques de couleur. Dans un deuxième exemple, il s'agit de filtres de couleurs qui laissent ainsi passer une certaine lumière, permettant de voir ou distinguer des éléments situés en dessous. On notera que, dans une première variante, les parties décoratives ne sont pas des polariseurs, aucun affichage commutable n'étant prévu dans les zones respectives de ces parties décoratives. Cependant, notamment pour des raisons esthétiques et éviter que le bord du polariseur supérieur / avant 20 ne soit visible, ce polariseur supérieur / avant recouvre également les parties décoratives 22 à 25, étant donné qu'il s'étend sur toute la surface utile 12 de la cellule LCD 2. Dans une deuxième variante, les parties décoratives peuvent être formées par des polariseurs. Toutefois, aucune électrode n'est prévue en face de ces polariseurs, de sorte qu'ils ont une fonction purement décorative. De manière classique, les polariseurs et les parties décoratives sont fixés à la plaque transparente correspondante par collage à celles-ci.

A la Figure 3 est représentée une deuxième variante du premier mode de réalisation principal. Les éléments semblables à la première variante ne seront pas tous décrits à nouveau. La cellule à cristaux liquides 42 comprend une première plaque transparente 4, laquelle est une plaque inférieure de la cellule LCD 42. Sous cette plaque 4 sont agencés deux polariseurs 44 et 46, le polariseur 46 présentant une ouverture 14A dans laquelle est situé le polariseur 44. Le contour / bord du polariseur 44 longe le contour / bord de l'ouverture 14A de manière similaire à la première variante. Cette deuxième variante se distingue de la première variante premièrement par le fait que le polariseur 46 est recouvert, sur sa surface arrière, par un film réfléchissant 48. En outre, la deuxième variante se distingue de la première variante par le fait que l'ensemble formé du polariseur 46 et du film réfléchissant 48 présente un relief qui engendre visuellement un motif, périodique ou non, qui est visible pour un utilisateur de la montre dans laquelle la cellule LCD 42 est incorporée.

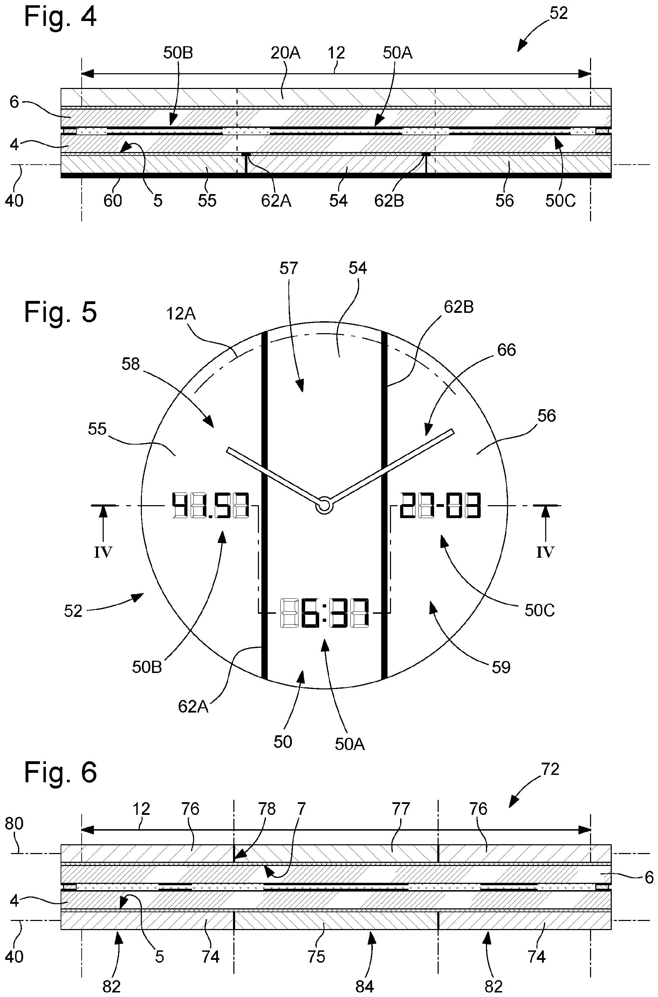

En référence aux Figures 4 et 5, on décrira une cellule LCD 52 formant une troisième variante du premier mode de réalisation principal d'un dispositif d'affichage horloger selon l'invention. Les références déjà décrites ne seront pas à nouveau décrites ici.

Dans la troisième variante, il est prévu généralement au moins deux polariseurs qui sont juxtaposés, ces deux polariseurs présentant des contours respectifs dont une partie de l'un longe une partie de l'autre.

Par l'expression 'deux polariseurs juxtaposés', on comprend que les deux polariseurs présentent des contours / bords avec une partie du contour / bord du premier polariseur qui longe une partie du contour / bord de l'autre polariseur. Le verbe `longer' indique que ladite partie du contour / bord du premier polariseur suit de près ladite partie du contour/ bord de l'autre polariseur, de préférence de manière sensiblement parallèle. Ces deux parties respectives des deux contours / bords peuvent présenter entre elles un interstice (petite fente), de préférence peu ou pas perceptible pour un utilisateur du dispositif d'affichage selon l'invention. Dans une variante particulière, les contours / bords, dans la zone utile 12, de polariseurs juxtaposés sont recouverts par une étroite bande de masquage, comme ceci sera exposé encore par la suite.

Dans la troisième variante, telle que représentée, la cellule LCD 52 comprend un polariseur avant 20A, en particulier absorbant-transmissif, et trois polariseurs arrière 54, 55 et 56 agencés dans un même plan géométrique 40 et juxtaposés. Lorsque l'on parle de plus de deux polariseurs juxtaposés, on comprend que chaque polariseur est juxtaposé à au moins un autre polariseur. Ainsi, dans la variante représentée, les polariseurs 54 et 55 sont juxtaposés, deux parties rectilignes de leurs contours respectifs étant parallèles et à faible distance, voire quasi confondus (les bords définissant ces deux parties rectilignes pouvant être quasi l'un contre l'autre). Il en va de même pour les polariseurs 55 et 56. A nouveau le polariseur avant 20A s'étend dans toute la zone utile 12 et recouvre, dans cette zone utile, entièrement les polariseurs arrière 54, 55 et 56. La cellule LCD 52 est destinée à former un cadran d'une montre ayant un affichage analogique 66. La cellule LCD 52 forme un disque percé en son centre pour le passage des axes des aiguilles de l'affichage analogique et la zone utile 12 correspond à la partie visible du cadran pour un utilisateur de la montre dans laquelle est incorporé de dispositif d'affichage comprenant la cellule LCD 52. Ainsi, la surface utile est une zone annulaire dont la limite extérieure 12A correspond au cercle défini par un rehaut de la boîte de montre situé sur la cellule LCD. L'affichage commutable 50 comprend trois affichages particuliers 50A, 50B et 50C qui sont respectivement formés par les trois polariseurs 54, 55 et 56 de la pluralité de polariseurs agencés sur la surface extérieure 5 de la plaque transparente 4 et situés dans trois zones distinctes respectives 57, 58 et 59 de la zone utile 12. Dans l'exemple donné, l'affichage commutable 50A est un affichage des heures et des minutes d'un intervalle de temps mesuré dans un mode chrono et l'affichage commutable 50B donne les secondes et les centièmes de seconde de ce temps mesuré. L'affichage 50C donne le quantième et le mois de la date.

Un film réfléchissant 60 est agencé sous les trois polariseurs 54 à 56 et recouvre ces trois polariseurs. Le film réfléchissant 60 est en une seule pièce et il est collé contre les trois polariseurs dans une étape ultérieure au collage des polariseurs sur la surface extérieure 5 de la plaque 4.

Le polariseur 54 présente avantageusement une couleur différente de celle des deux polariseurs 55 et 56. Dans une variante, les polariseurs arrière ont diverses couleurs. On peut aussi avoir divers tons d'une couleur donnée. De manière générale, chaque polariseur de la pluralité de polariseurs peut être formé par un seul film polarisant ou plusieurs films polarisants. En d'autres termes, chaque polariseur est formé par au moins un film polarisant. Chaque polariseur peut être combiné à un filtre de couleur et/ou un film réfléchissant et/ou opaque inférieur. Dans une variante, chacun des polariseurs est recouvert inférieurement par un propre film réfléchissant présentant les mêmes dimensions que le polariseur, chaque polariseur étant assemblé à son propre film réfléchissant avant son dépôt sur la plaque transparente 4. On remarquera que des filtres colorés peuvent s'étendre dessus ou dessous les polariseurs, de manière individuelle ou collectivement sur/sous au moins deux des polariseurs, notamment sur/sous tous les polariseurs de la pluralité de polariseurs. On comprend que les combinaisons possibles à la disposition de la personne du métier sont nombreuses et permettent d'obtenir diverses variantes décoratives avec différentes couleurs et effets visuels pour le fond de la cellule LCD et aussi pour les éléments de l'affichage commutable.

La troisième variante présente encore une caractéristique particulière qui peut également être prévue dans d'autres variantes du premier mode de réalisation, notamment dans les première et deuxième variantes décrites précédemment, et aussi dans des variantes du deuxième mode de réalisation qui sera décrit par la suite. Cette caractéristique consiste à masquer, dans la zone utile, les bords de polariseurs de la pluralité de polariseurs, en particulier lorsque deux polariseurs sont juxtaposés (premier cas) ou qu'un polariseur est situé à l'intérieur d'une ouverture d'un autre polariseur (deuxième cas), par un matériau opaque qui recouvre ces bords et ainsi les contours de ces polariseurs de manière à masquer, pour un utilisateur de la pièce d'horlogerie à laquelle le dispositif d'affichage est destiné, tout interstice éventuel entre deux parties respectives de deux de ces contours dont l'une longe l'autre (dans le premier cas) ou entre deux de ces contours dont l'un longe l'autre (dans le deuxième cas). Dans la variante représentée aux Figures 4 et 5, le matériau opaque déposé forme deux bandes de masquage rectilignes 62A et 62B. Dans cette variante, la plaque transparente 4 est une plaque inférieure de la cellule LCD 52 et la pluralité de polariseurs 54 à 56, qui sont agencés à sa surface extérieure, sont des polariseurs arrière (à noter que ces polarisateurs et les bandes de masquage sont montrés, à la Figure 5, en transparence des éléments situés au-dessus). Dans ce cas, le matériau opaque est avantageusement déposé sur la surface extérieure 5 de la plaque 4 entre cette dernière et les bords des polariseurs dont les contours sont recouverts par le matériau opaque dans la zone utile 12.

En référence à la Figure 6, on décrira une cellule LCD 72 formant une première variante d'un deuxième mode de réalisation principal d'un dispositif d'affichage horloger selon l'invention. Les éléments déjà décrits dans le cadre du premier mode de réalisation ne seront pas à nouveau décrits ici en détails.

La cellule LCD 72 comprend dans la zone utile 12, comme dans le premier mode de réalisation, une première pluralité de polariseurs, 74 et 75, agencés sur la surface extérieure 5 de la première plaque transparente 4 et s'étendant dans le plan géométrique 40. Selon une caractéristique générale du deuxième mode de réalisation, la cellule LCD 72 comprend dans la zone utile 12 en outre une deuxième pluralité de polariseurs, 76 et 77, qui sont agencés sur la surface extérieure 7 de la deuxième plaque transparente 6 respectivement dans une deuxième pluralité de zones distinctes, 82 et 84. De manière générale, au moins deux polariseurs 76 et 77 de la deuxième pluralité de polariseurs présentent entre eux au moins une propriété optique différente ou une orientation de polarisation différente. A noter que les zones d'affichage commutables sont représentées comme dans le premier mode de réalisation, mais sans recevoir de références.

Selon une caractéristique avantageuse, la deuxième pluralité de polariseurs s'étend sensiblement dans un même plan géométrique, de préférence elle s'étend dans un même plan géométrique 80 comme dans l'exemple représenté.

La première variante décrite ici présente deux caractéristiques spécifiques. Premièrement, le premier polariseur 76 de la deuxième pluralité de polariseurs présente une ouverture 78 dans laquelle est situé le deuxième polariseur 77 de cette deuxième pluralité de polariseurs, ce deuxième polariseur présentant un contour extérieur qui longe le contour de l'ouverture. Selon la deuxième caractéristique spécifique, laquelle est indépendante de la première, les deux polariseurs 74, 75 de la première pluralité de polariseurs sont respectivement superposés aux deux polariseurs 76, 77 de la deuxième pluralité de polariseurs et s'étendent dans les mêmes zones distinctes respectives 82 et 84 de la zone utile 12. Le polariseur 74 présente ainsi une ouverture dont le contour est aligné, selon une direction orthogonale au plan général de la cellule LCD (parallèle aux plans géométriques 40 et 80), avec le contour de l'ouverture 78 du polariseur 76. La zone 82 de la zone utile 12 de la cellule LCD 72 est donc indépendante, autant pour le fond que pour l'affichage commutable, de la zone 84 de cette zone utile.

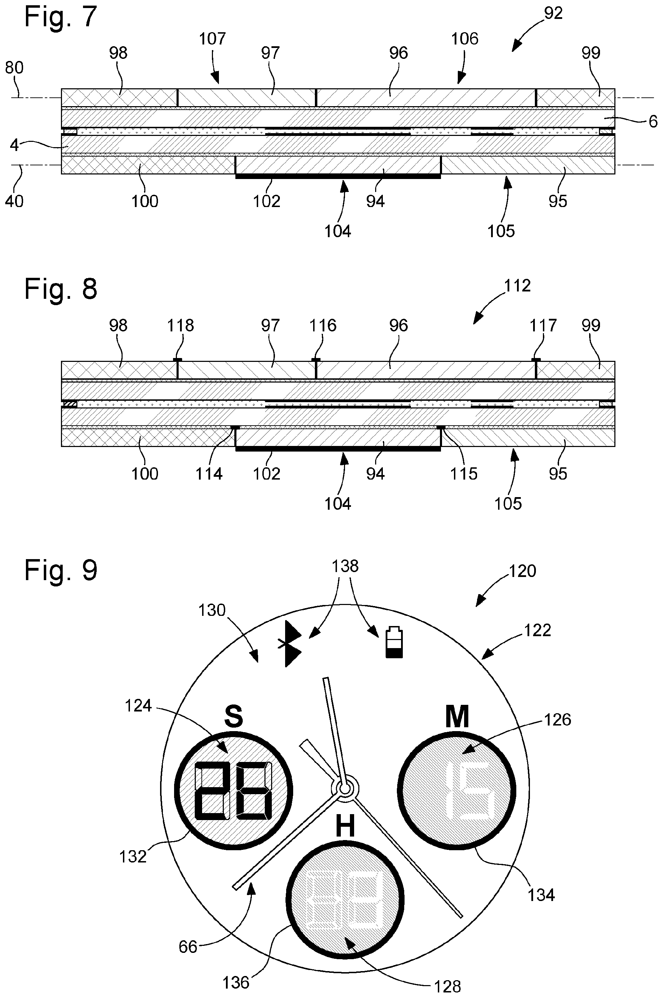

En référence à la Figure 7, on décrira une deuxième variante du deuxième mode de réalisation permettant d'obtenir un dispositif d'affichage LCD présentant de nombreuses zones ayant des variations visuelles pour un utilisateur et formant ensemble un motif relativement complexe qui permet de définir un décor original.

La cellule LCD 92 comprend une première pluralité de polariseurs définissant chacun en partie l'affichage commutable, à savoir les polariseurs 94 et 95, qui sont agencés sur la surface extérieure de la plaque 4, laquelle est dans l'exemple représenté une plaque inférieure, et une deuxième pluralité de polariseurs définissant aussi chacun partiellement l'affichage commutable, à savoir les polariseurs 96 et 97 qui sont agencés sur la surface extérieure de la plaque 6. La première pluralité de polariseurs s'étend dans le plan géométrique 40 et la deuxième pluralité de polariseurs s'étend dans le plan géométrique 80.

La deuxième variante présente deux caractéristiques spécifiques. Premièrement, au moins deux polariseurs 96, 97 de la deuxième pluralité de polariseurs sont juxtaposés, ces deux polariseurs présentant des contours respectifs dont une partie de l'un longe une partie de l'autre. De même, les deux polariseurs 94, 95 de la première pluralité sont aussi juxtaposés. Comme deuxième caractéristique spécifique, au moins un premier polariseur de la première pluralité de polariseurs est superposé seulement partiellement à au moins un deuxième polariseur de la deuxième pluralité. Plus précisément dans la variante représentée, le polariseur 94 est superposé en partie au polariseur 96 et en partie au polariseur 97, et le polariseur 95 est superposé en partie au polariseur 96. Ainsi, dans la zone utile, les contours des polariseurs de la première pluralité ne sont pas alignés avec les contours des polariseurs de la deuxième pluralité, de sorte que les zones distinctes respectives 104 et 105 des polariseurs 94 et 95 ne sont pas confondues en superposition avec les zones distinctes respectives 106 et 107 des polariseurs 96 et 97. Il résulte de cette configuration que les zones distinctes dans le plan géométrique 40, relatives à l'agencement de la première pluralité de polariseurs, et les zones distinctes dans le plan géométrique 80, relatives à l'agencement de la deuxième pluralité de polariseurs, engendre plus de zones visuellement variées que le nombre de polariseurs dans la première pluralité et que le nombre de polariseurs dans la deuxième pluralité.

Dans la variante représentée, un film réfléchissant 102 est agencé uniquement sous le polariseur 94, lequel est un polariseur arrière.

La cellule LCD 92 comprend en outre, dans une zone distincte du plan géométrique inférieur 40, un film décoratif 100 qui est juxtaposé au polariseur 94 et, dans deux zones distinctes respectives du plan géométrique supérieur 80, deux films décoratifs 98, 99 qui sont respectivement juxtaposés aux polariseurs 96, 97. Dans une alternative, un seul film décoratif est prévu dans le plan géométrique supérieur 80, ce film décoratif présentant une ouverture dans laquelle sont situés les polariseurs 96 et 97 qui remplissent ensemble cette ouverture. Les films décoratifs sont formés par des filtres de couleur, des polariseurs ou d'autres films qui peuvent être opaques ou réfléchissants et plans ou en relief. Ces films décoratifs ne participent pas à l'affichage commutable de la cellule LCD 92, mais ils participent à l'aspect visuel de la cellule LCD dans la zone utile 12 et à différencier visuellement diverses zones dans cette zone utile pour définir une composition de zones décoratives.

A la Figure 8 est représentée une troisième variante du deuxième mode de réalisation principal de l'invention. Cette troisième variante se distingue de la deuxième variante par un masquage, dans la zone utile, des bords des polariseurs 94 et 95 et du film décoratif 100 qui s'étendent dans le plan géométrique inférieur et donc des contours de ces éléments dont chacun longe un autre. La cellule LCD 112 comprend des bandes de masquage 114 et 115 qui sont formées par un matériau opaque comme dans la troisième variante du premier mode de réalisation. Ensuite, cette troisième variante se distingue de la deuxième variante par un masquage, dans la zone utile, des bords des polariseurs 96 et 97 et des films décoratifs 98 et 99 qui s'étendent dans le plan géométrique supérieur et qui sont juxtaposés, les contours de ces éléments longeant chacun au moins partiellement un autre dans la zone utile. A cet effet, la cellule LCD 112 comprend des bandes de masquage 116, 117 et 118 qui sont formées par un matériau opaque déposé au-dessus desdits bords. De manière générale, les bandes de masquage sont formées par un matériau opaque qui recouvre les contours des polariseurs de la deuxième pluralité de polariseurs de manière à masquer, pour un utilisateur de la pièce d'horlogerie à laquelle le dispositif d'affichage est destiné, tout interstice éventuel entre deux parties respectives de deux de ces contours dont l'une longe l'autre ou entre deux de ces contours dont l'un longe l'autre. Dans l'exemple représenté, étant donné qu'on a, en plus des polariseurs de ladite deuxième pluralité, des films décoratifs agencés dans le même plan géométrique supérieur 80, le matériau opaque recouvre également les contours de ces films décoratifs dans la zone utile.

La Figure 9 est une vue de dessus d'un cadran 120 formé par un dispositif d'affichage selon l'invention et comprenant une cellule à cristaux liquides 122. Cette cellule LCD 122 est réalisée de manière similaire à celle décrite en lien avec la première variante du premier mode de réalisation ou du deuxième mode de réalisation, avec en plus l'agencement de bandes de masquage 132, 134 et 136 réalisées comme décrit dans la troisième variante du premier mode de réalisation ou du deuxième mode de réalisation. Une pluralité de polariseurs sont agencés dans les zones distinctes respectives 124, 126, 128 et 130. Au moins un des polariseurs agencés dans la zone 130 présente trois ouvertures dans lesquelles sont agencés respectivement trois polariseurs présentant au moins une propriété optique différente ou une orientation de polarisation différente avec le polariseur ayant les trois ouvertures. Le cadran 120 équipe une montre ayant un affichage analogique 66 donnant l'heure, la minute et la seconde de l'heure courante. L'affichage commutable de la cellule LCD 122 est configuré pour pouvoir servir à une fonction chrono de la montre. Ainsi, la seconde, la minute et l'heure d'un intervalle de temps chronométré s'affichent respectivement dans les zones distinctes circulaires 124, 126 et 128. Dans la zone distincte 130 peuvent être affichés des symboles 138 relatifs à au moins une fonction de la montre, par exemple l'activation de la fonction 'Bluetooth', ou au niveau de la batterie. Les lettres `S', 'M' et 'H' peuvent aussi faire partie de l'affichage commutable et n'apparaître que lorsque la fonction chrono est activée. Cette configuration est avantageuse en particulier lorsque l'on souhaite utiliser l'affichage commutable dans les zones 124, 126 et 128 aussi pour d'autres informations. Dans une alternative dédiée à la seule fonction chrono, ces lettres peuvent être obtenues par une encre déposée sur le cadran ou éventuellement dans la cellule LCD. Dans l'exemple représenté, la zone 124 présente une variation visuelle relativement aux zones 126 et 128, cette variation pouvant être une couleur différente ou un ton différent d'une couleur donnée, y compris le gris. La partie de l'affichage commutable dans la zone 124 est du type à contraste positif alors que les parties de cet affichage commutable dans les zones 126 et 128 sont du type à contraste négatif.

## Revendications

1. Dispositif d'affichage horloger comprenant une cellule à cristaux liquides (2 ; 42 ; 52 ; 72 ; 92 ; 112 ; 122) formée d'une première plaque (4) et d'une deuxième plaque (4), qui sont transparentes, et d'un cordon de colle (8) reliant les première et deuxième plaques et définissant avec celles-ci un logement clos contenant des cristaux liquides (10), la cellule à cristaux liquides définissant à l'intérieur du cordon de colle une zone utile (12), qui est destinée à définir la zone visible de cette cellule dans une pièce d'horlogerie auquel le dispositif d'affichage est destiné, et incorporant des électrodes (34, 35, 36, 37 ; 34A, 35A, 36A, 37A) formant un affichage commutable (30) d'au moins une information et/ou d'au moins un décor dans la zone utile ; **caractérisé en ce que** la cellule à cristaux liquides comprend dans la zone utile (12) une pluralité de polariseurs (16, 18 ; 44, 46 ; 54, 55, 56 ; 74, 76 ; 94, 95) qui sont agencés sur la surface extérieure (5) de la première plaque respectivement dans une pluralité de zones distinctes (17, 19; 57, 58, 59 ; 104, 105) et qui forment chacun en partie ledit affichage commutable ; et **en ce qu'**au moins deux polariseurs de la pluralité de polariseurs présentent entre eux au moins une propriété optique différente ou une orientation de polarisation différente, le dispositif d'affichage horloger étant agencé de manière à engendrer visuellement une variation entre au moins des parties respectives desdits au moins deux polariseurs et/ou des parties respectives dudit affichage commutable dans les zones distinctes respectives.

2. Dispositif d'affichage selon la revendication 1, **caractérisé en ce que** ladite pluralité de polariseurs s'étend sensiblement dans un même plan géométrique (40).

3. Dispositif d'affichage selon la revendication 2, **caractérisé en ce que** lesdits au moins deux polariseurs (54, 55, 56 ; 94, 95) de la pluralité de polariseurs sont juxtaposés, ces deux polariseurs présentant des contours respectifs dont une partie de l'un longe une partie de l'autre.

4. Dispositif d'affichage selon la revendication 2, **caractérisé en ce qu'**un premier polariseur (16 ; 48 ; 74) parmi lesdits au moins deux polariseurs de la pluralité de polariseurs présente une ouverture (14 ; 14A) dans laquelle est situé un deuxième polariseur desdits au moins deux polariseurs de la pluralité de polariseurs, le deuxième polariseur présentant un contour extérieur longeant le contour de l'ouverture.

5. Dispositif d'affichage selon la revendication 3 ou 4, **caractérisé en ce qu'**un matériau opaque (62A ,62B ; 114, 115) recouvre les contours de polariseurs de ladite pluralité de polariseurs de manière à masquer, pour un utilisateur de la pièce d'horlogerie à laquelle le dispositif d'affichage est destiné, tout interstice éventuel entre deux parties respectives de deux de ces contours dont l'une longe l'autre ou entre deux de ces contours dont l'un longe l'autre.

6. Dispositif d'affichage selon la revendication 5, **caractérisé en ce que** la première plaque (4) est une plaque inférieure de la cellule à cristaux liquides, les polariseurs de ladite pluralité de polariseurs étant des polariseurs arrière de la cellule à cristaux liquides.

7. Dispositif d'affichage selon la revendication 6, **caractérisé en ce que** le matériau opaque est déposé sur la surface extérieure (5) de la première plaque (4) entre cette dernière et des bords desdits polariseurs dont les contours sont recouverts par le matériau opaque.

8. Dispositif d'affichage selon une quelconque des revendications 1 à 7, **caractérisé en ce qu'**un seul polariseur (20 ; 20A) est agencé sur la surface extérieure (7) de la deuxième plaque (6), cette deuxième plaque étant une plaque supérieure et le seul polariseur étant un polariseur avant de la cellule à cristaux liquides (2 ; 42 ; 52).

9. Dispositif d'affichage selon la revendication 8, **caractérisé en ce que** ledit seul polariseur s'étend sur toute ladite surface utile (12) de la cellule à cristaux liquides.

10. Dispositif d'affichage selon une quelconque des revendications 1 à 7, dans lequel ladite pluralité de polariseurs est une première pluralité de polariseurs et ladite pluralité de zones distinctes est une première pluralité de zones distinctes ; **caractérisé en ce que** la cellule à cristaux liquides (72 ; 92 ; 112) comprend dans ladite zone utile (12) une deuxième pluralité de polariseurs (76, 77 ; 96, 97) qui sont agencés sur la surface extérieure (7) de la deuxième plaque (6) respectivement dans une deuxième pluralité de zones distinctes (82, 84 ; 106, 107) ; et **en ce qu'**au moins deux polariseurs de la deuxième pluralité de polariseurs présentent entre eux au moins une propriété optique différente ou une orientation de polarisation différente.

11. Dispositif d'affichage selon la revendication 10, **caractérisé en ce que** la deuxième pluralité de polariseurs s'étend sensiblement dans un même plan géométrique (80) et au moins deux polariseurs de la deuxième pluralité de polariseurs (96,97) sont juxtaposés, ces deux polariseurs présentant des contours respectifs dont une partie de l'un longe une partie de l'autre.

12. Dispositif d'affichage selon la revendication 10 ou 11, **caractérisé en ce que** la deuxième pluralité de polariseurs s'étend sensiblement dans un même plan géométrique (80) ; et **en ce qu'**un premier polariseur (76) de la deuxième pluralité de polariseurs présente une ouverture (78) dans laquelle est situé un deuxième polariseur (77) de cette deuxième pluralité de polariseurs qui présente un contour extérieur longeant le contour de l'ouverture.

13. Dispositif d'affichage selon la revendication 11 ou 12, **caractérisé en ce qu'**un matériau opaque (116, 117, 118) recouvre les contours de polariseurs (96,97) de la deuxième pluralité de polariseurs de manière à masquer, pour un utilisateur de la pièce d'horlogerie à laquelle le dispositif d'affichage est destiné, tout interstice éventuel entre deux parties respectives de deux de ces contours dont l'une longe l'autre ou entre deux de ces contours dont l'un longe l'autre.

14. Dispositif d'affichage selon une quelconque des revendications 1 à 9, **caractérisé en ce que** ladite propriété optique différente entre deux polariseurs est une variation de couleur.

15. Dispositif d'affichage selon une quelconque des revendications 10 à 14, **caractérisé en ce que** ladite propriété optique différente entre deux polariseurs de la deuxième pluralité de polariseurs est une variation de couleur.

16. Dispositif d'affichage selon une quelconque des revendications 1 à 9, **caractérisé en ce que** ladite propriété optique différente entre deux polariseurs est une variation de ton.

17. Dispositif d'affichage selon une quelconque des revendications 10 à 14, **caractérisé en ce que** ladite propriété optique différente entre deux polariseurs de la deuxième pluralité de polariseurs est une variation de ton.

18. Dispositif d'affichage selon une quelconque des revendications 1 à 17, **caractérisé en ce que** la première plaque est une plaque inférieure de la cellule à cristaux liquides ; et **en ce qu'**au moins un des polariseurs de la pluralité de polariseurs est recouvert sur sa surface arrière par un film réfléchissant (60 ; 48 ; 102).
